# EUROPEAN PATENT SPECIFICATION

(11) **EP 3 807 909 B1**
(45) Date of publication and mention of the grant of the patent: **24.08.2022**
(21) Application number: 19725730.6
(22) Date of filing: 23.05.2019
(51) Int. Cl.: H01B 3/56, H02B 13/065

(54) **LIGHT INDICATOR FOR LOCATION OF INTERNAL ARCS IN FLUID INSULATED SWITCHGEAR**
LICHTINDIKATOR ZUR ORTUNG VON INTERNEN LICHTBÖGEN IN FLUIDISOLIERTEN SCHALTANLAGEN
INDICATEUR LUMINEUX POUR LOCALISER DES ARCS INTERNES DANS UN APPAREILLAGE DE COMMUTATION À ISOLATION PAR LIQUIDE

(30) Priority: 18.06.2018 EP 18178209
(43) Date of publication of application: 21.04.2021
(73) Proprietor: Hitachi Energy Switzerland AG, 5400 Baden (CH)
(72) Inventor: STOLLER, Patrick, 8117 Fällanden (CH)
(74) Representative: Michalski Hüttermann & Partner Patentanwälte mbB
(86) International application number: PCT/EP2019/063285
(87) International publication number: WO 2019/242977

(56) References cited:
- KR-A- 20140 041 088
- US-A1- 2014 062 498
- US-A1- 2015 103 337

## Description

### FIELD OF THE INVENTION

The invention relates to a fluid insulated switchgear, a use of a light sensitive material and a method for detecting an internal arc.

### BACKGROUND OF THE INVENTION

Fluid insulated switchgear, which may comprise an insulating gas, such as SF₆, may comprise a burst disk, which may open when an internal arc occurs inside the switchgear. Usually, the burst disk is used for localizing the component with the arc fault. If an internal arc results in opening of the burst disk, the affected fluid compartment can readily be identified. However, in many cases the burst disk does not open, and there usually is no indication on the outside of the fluid compartment that an internal arc fault occurred.

Manufacturers and customers are interested in locating such arc faults quickly in order to repair or replace the affected component and bring the switchgear back into service as rapidly as possible.

In the absence of a system to locate an internal arc, many switchgear compartments may have to be disassembled to locate the fluid compartment where the arc fault occurred. Several approaches exist to find the location of an internal arc fault.

Light may be detected using optical fibers and detectors. This approach may be expensive, may require time-consuming installation of a complex network of optical fibers and/or may not always be reliable.

Furthermore, gas samples may be acquired in all compartments and the concentration of arc-related SF6 decomposition by-products may be measured. This approach may not work if the SF₆ decomposition by-products are adsorbed by a molecular sieve installed in the fluid compartment. There also may be only a short time window to acquire a gas sample before the by-products are adsorbed.

A further approach is to record the pressure inside the fluid compartment with a sufficiently high time resolution to detect a sudden rise in pressure associated with an internal arc fault. This may require the installation of additional sensors and a data acquisition system with high time resolution. In addition, the pressure measurements may have to be transmitted electronically and may be subject to electromagnetic interference. US2015/103337, KR 2014 0041088 and US 2014/062498 disclose such gas insulated switchgears.

### DESCRIPTION OF THE INVENTION

It is an objective of the invention to provide a simple and reliable method for detecting an internal arc fault in a fluid insulated switchgear.

This objective is achieved by the subject-matter of the independent claims. Further exemplary embodiments are evident from the dependent claims and the following description.

An aspect of the invention relates to a fluid insulated switchgear. A switchgear may be any device comprising switches, in particular mechanical switches, and/or circuit breakers adapted for switching medium and high voltages and/or high currents. A medium voltage may be a voltage of more than 1 kV, such as more than 50 kV. A high voltage may be a voltage of more than 100 kV. A high current may be a current of more than 10 A. The switchgear may be seen as a medium voltage and/or high voltage switchgear. A switchgear also may be and/or may comprise a gas insulated transmission line and/or bus duct. In general, a switchgear may be adapted for transmission of electricity between two points with compact equipment.

A fluid insulated switchgear may be a switchgear that uses a fluid, such as a gas and/or liquid for insulating the switch. Usually, the fluid is accommodated in a fluid compartment that also may house a switch and its electrical connectors.

According to an embodiment of the invention, the fluid insulated switchgear comprises: a fluid compartment filled with an electrically insulating fluid; an electrical conductor inside the fluid compartment and electrically insulated by the electrically insulating fluid; and a light sensitive marker with a light sensitive substance that changes color when exposed to light. The light sensitive marker is arranged at a position that may be exposed to light generated by an internal arc. For example, the light sensitive marker may be attached to the fluid insulated switchgear at a position that may be exposed to light generated by an internal arc.

The fluid compartment may be or may comprise a fluid tight housing, which prevents the electrically insulating fluid from leaving the fluid compartment. The electrical conductor inside the fluid compartment may be immersed in the electrically insulating fluid.

The electrical conductor may be part of an electrical switch. The electrical conductor may comprise a switch and/or its electrical supply lines. It may be that the electrical supply lines enter and/or leave the fluid compartment. Also a bushing for guiding lines into the switchgear may be seen as a part of the switchgear with fluid compartment. It also may be that the switchgear comprises several fluid compartments some of which comprise a switch and/or some of which comprise solely electrical lines.

The electrical conductor may be on a potential, for example with a voltage of more than 1 kV, more than 10 kV or more than 100 kV. Also, parts of the fluid compartment and/or the housing may be on this potential. Alternatively, the fluid compartment and/or the housing may be electrically insulated from the electrical conductor.

The light sensitive marker is sensitive to light and/or may be seen as a light indicator.

The light sensitive marker is sensitive in such a way that it changes its (visible) color, when it is exposed to a specific dose of light. For example, the intensity and/or the maximum of the wavelength of visible light reflected by the light sensitive marker may change.

A color change may include all possible changes of color, such as changing the base color, fading, darkening, a change in intensity, etc.

The light sensitive marker may comprise a substance that sensitive to light and that changes its color, when exposed to light. Additionally, the light sensitive marker may comprise substances for stabilizing and/or carrying the light sensitive substance, such as a plastic foil and/or protection layers.

The light sensitive marker may be attached to the fluid insulated switchgear at a position that is usually exposed to light generated by an internal arc. This position may be inside the fluid compartment or outside the fluid compartment. I.e. the light sensitive marker may be exposed to the electrically insulating fluid or not.

It also may be that the light sensitive marker is attached at a position that is shielded from ambient light. In such a way, only light from an internal arc may fall onto the light sensitive marker.

The light sensitive marker may be used for inexpensive, electromagnetic-interference-free determination and/or localization of fluid compartments where an internal arc occurred. The light sensitive marker may be placed at any location with optical access. If an internal arc occurs, the light sensitive marker may simply be investigated for color changes to locate the affected fluid compartment.

According to an embodiment of the invention, the light sensitive marker comprises an ultraviolet light sensitive substance, which changes color, when exposed to ultraviolet light. Ultraviolet light may be light with a wavelength between 10 to 400 nanometers. Using an ultraviolet light sensitive substance may be useful, since arcs usually generate light with high power in the ultraviolet range.

According to an embodiment of the invention, the light sensitive marker is attached to an inside wall of the fluid compartment. The light sensitive marker may be attached, such that it is visible through a viewing port into the fluid compartment. For example, the light sensitive marker may be an area of light sensitive paint or a light sensitive foil, which is provided at an inside wall, which is facing the electrical conductor.

A viewing port may be a device in a wall of the fluid compartment, which comprises a window, through which a service technician may look inside the fluid compartment. The window may be impermeable to air and/or electric isolating fluid. However, the window may be permeable for at least visible light.

According to an embodiment of the invention, the light sensitive marker is attached outside of the fluid compartment. For example, the light sensitive marker may be attached outside of a window and/or glass pane. The window and/or glass pane may be positioned so that light generated by an internal arc may fall through the window and/or glass pane onto the light sensitive marker.

According to an embodiment of the invention, the light sensitive marker is incorporated into a viewing port. A viewing port may comprise a window for looking into the fluid compartment, which window is integrated into a wall of the fluid compartment. Furthermore, a viewing port may comprise a cover for covering the viewing port when it is not used. The cover may protect the window of the viewing port and/or may prevent ambient light from falling into the fluid compartment.

The light sensitive marker may be attached to the inside of the window, the outside of the window and/or to the inside of the cover. A viewing port cover may be removed so that the light sensitive marker can be checked for exposure to light, for example after a detection of an internal arc fault somewhere in the switchgear and/or devices connected thereto.

When the light sensitive marker is incorporated into a viewing port, the light sensitive marker may only be exposed in the long term to light from inside the fluid compartment and not to ambient light. Ambient light may also contain a small amount of light that may lead to a change in the color of the light sensitive marker, for example over years or decades of exposure.

According to an embodiment of the invention, the light sensitive marker is attached to an inside of a viewing port cover of a viewing port. For example, an inner wall of the cover may be provided with a sensitive foil strip and/or with a sensitive paint.

According to an embodiment of the invention, the light sensitive marker is attached to a glass pane of the viewing port. The glass pane may provide a window of the viewing port. The light sensitive marker may be attached inside or outside to the glass pane, for example in the form of a sensitive paint and/or foil strip.

According to an embodiment of the invention, the light sensitive marker is attached to a density sensor penetrating into the fluid compartment, when mounted to a sensor mounting integrated into the fluid compartment. For example, the light sensitive marker is attached to a tip of the density sensor.

It also may be that the end and/or tip of the density sensor is provided with a sensitive foil strip and/or sensitive paint. The end and/or tip of the sensor may have to be exposed to the insulating fluid and therefore to light generated inside the fluid compartment.

According to an embodiment of the invention, the sensor mounting has a hatch that is opened by the tip of the density sensor and that closes, when the density sensor is removed from the sensor mounting. The density sensor may be mounted in such a way that it can be removed without discharging any fluid or only a minimal amount of fluid from the fluid compartment. The sensor mounting may have a hatch that automatically closes the fluid compartment, when the density sensor is removed from the sensor mounting. For example, a spring may be attached to the hatch. A service technician easily may inspect the light sensitive marker by removing the density sensor from the sensor mounting, looking at it and plugging it back into the sensor mounting.

According to an embodiment of the invention, the light sensitive marker comprises a plastics foil onto which the light sensitive substance is applied. The light sensitive marker may comprise a foil strip, onto which the light sensitive substance is applied. The plastics foil may be attached to a wall of the fluid insulated switchgear, the viewing port cover, the viewing port window and/or the density sensor. The plastics foil also may comprise a self-adhesive side. A light indicator strip may be used as light sensitive marker.

According to an embodiment of the invention, the light sensitive marker is made of paint comprising the light sensitive substance. The paint may be applied to a wall of the fluid insulated switchgear, the viewing port cover, the viewing port window and/or the density sensor. The sensitive paint may be applied at any location that easily may be accessed to determine if the light sensitive substance contained in the paint has changed color.

According to an embodiment of the invention, the light sensitive marker comprises several fields, which have different sensitivities to light. One of the fields may change color more quickly than another field. By comparing the color of the fields, it may be decided, whether the light sensitive marker has been exposed to the light of an internal arc in contrast to a switching arc, a disconnector arc, an earthing switch arc, or partial discharge, etc.. For example, each of the fields, which may be provided on a plastic foil, may be correlated to a range of dose.

Alternatively or additionally, for determining the dose, also the color of the light sensitive marker may be compared with a reference table of colors.

According to an embodiment of the invention, a light filter is provided on the light sensitive marker. The light filter may filter light falling onto the light sensitive substance. The light sensitive marker may comprise a light filtering layer. For example, a light sensitive marker with a plastics foil onto which a light sensitive substance is applied may be covered with a filter layer.

The amount of light reaching the light sensitive marker may be modulated through the use of ultraviolet and/or neutral density filters. Such filters may attenuate the light reaching the indicator, and may be used to prevent a small amount of light (for example, from a circuit breaker, disconnector, earthing switch, load break switch, or partial discharge) from changing the color of the light sensitive substance, while still allowing enough light to pass during an internal arc fault.

Furthermore, light from the sun usually has another frequency maximum than the light from an arc. The filter may be designed so that light outside a frequency range around the frequency maximum of an arc producible by the gas insulated switchgear is filtered. In this case, it may not be necessary to shield the light sensitive marker from ambient light.

According to an embodiment of the invention, the electrically insulating fluid is a dielectric insulation gas. The fluid used in the fluid compartment may be SF₆ gas or any other dielectric insulation medium, may it be gaseous and/or liquid, and in particular can be a dielectric insulation gas or arc quenching gas. Also, SF₆-alternatives, such as C5 flour ketone mixed with CO₂ or other constituents of air, may be used. In general, also air, for example under pressure, may be used as electrically insulating gas.

In general, the dielectric insulation gas may comprise an organofluorine compound selected from the group consisting of: a fluoroether, an oxirane, a fluoroamine, a fluoroketone, a fluoroolefin, a fluoronitrile; and mixtures and/or decomposition products thereof.

Such dielectric insulation medium may encompass media comprising an organofluorine compound, such organofluorine compound being selected from the group consisting of: a fluoroether, an oxirane, a fluoroamine, a fluoroketone, a fluoroolefin, a fluoronitrile, and mixtures and/or decomposition products thereof. Herein, the terms "fluoroether", "oxirane", "fluoroamine", "fluoroketone", "fluoroolefin", and "fluoronitrile" refer to at least partially fluorinated compounds. In particular, the term "fluoroether" encompasses both fluoropolyethers (e.g. galden) and fluoromonoethers as well as both hydrofluoroethers and perfluoroethers, the term "oxirane" encompasses both hydrofluorooxiranes and perfluorooxiranes, the term "fluoroamine" encompasses both hydrofluoroamines and perfluoroamines, the term "fluoroketone" encompasses both hydrofluoroketones and perfluoroketones, the term "fluoroolefin" encompasses both hydrofluoroolefins and perfluoroolefins, and the term "fluoronitrile" encompasses both hydrofluoronitriles and perfluoronitriles. It can thereby be preferred that the fluoroether, the oxirane, the fluoroamine, the fluoroketone and the fluoronitrile are fully fluorinated, i.e. perfluorinated.

In embodiments, the dielectric insulation medium or more specifically the organofluorine compound comprised in the dielectric insulation medium or gas is selected from the group consisting of: fluoroethers, in particular a or several hydrofluoromonoether(s); fluoroketones, in particular a or several perfluoroketone(s); fluoroolefins, in particular a or several hydrofluoroolefin(s); fluoronitriles, in particular a or several perfluoronitrile(s); and mixtures thereof.

In particular, the term "fluoroketone" may be interpreted broadly and may encompass both fluoromonoketones and fluorodiketones or generally fluoropolyketones. Explicitly, more than a single carbonyl group flanked by carbon atoms may be present in the molecule. The term may also encompass both saturated compounds and unsaturated compounds including double and/or triple bonds between carbon atoms. The at least partially fluorinated alkyl chain of the fluoroketones can be linear or branched and can optionally form a ring.

In embodiments, the dielectric insulation medium comprises at least one compound being a fluoroketone, which may optionally comprise also heteroatoms incorporated into the carbon backbone of the molecules, such as at least one of: a nitrogen atom, oxygen atom and sulphur atom, replacing a corresponding number of carbon atoms. The fluoromonoketone, in particular perfluoroketone, can have from 3 to 15 or from 4 to 12 carbon atoms and particularly from 5 to 9 carbon atoms. It may comprise exactly 5 carbon atoms and/or exactly 6 carbon atoms and/or exactly 7 carbon atoms and/or exactly 8 carbon atoms.

In embodiments, the dielectric insulation medium comprises at least one compound being a hydrofluoroether selected from the group consisting of: hydrofluoromonoether containing at least three carbon atoms; hydrofluoromonoether containing exactly three or exactly four carbon atoms; hydrofluoromonoether having a ratio of number of fluorine atoms to total number of fluorine and hydrogen atoms of at least 5:8; hydrofluoromonoether having a ratio of number of fluorine atoms to number of carbon atoms ranging from 1.5:1 to 2:1; pentafluoro-ethyl-methyl ether; 2,2,2-trifluoroethyl-trifluoromethyl ether; and mixtures thereof.

In embodiments, the dielectric insulation medium comprises at least one compound being a fluoroolefin selected from the group consisting of: hydrofluoroolefins (HFO) comprising at least three carbon atoms, hydrofluoroolefins (HFO) comprising exactly three carbon atoms; general HFOs with a sum formula C3H2F4 or C3HF5; 1,1,1,2-tetrafluoropropene (HFO-1234yf; also named 2,3,3,3-tetrafluoro-1-propene), 1,2,3,3-tetrafluoro-2-propene (HFO-1234yc), 1,1,3,3-tetrafluoro-2-propene (HFO-1234zc), 1,1,1,3-tetrafluoro-2-propene (HFO-1234ze), 1,1,2,3-tetrafluoro-2-propene (HFO-1234ye), 1,1,1,2,3-pentafluoropropene (HFO-1225ye), 1,1,2,3,3-pentafluoropropene (HFO-1225yc), 1,1,1,3,3-pentafluoropropene (HFO-1225zc), (Z)1,1,1,3-tetrafluoropropene (HFO-1234zeZ; also named cis-1,3,3,3-tetrafluoro-1-propene), (Z)1,1,2,3-tetrafluoro-2-propene (HFO-1234yeZ), (E)1,1,1,3-tetrafluoropropene (HFO-1234zeE; also named trans-1,3,3,3-tetrafluoro-1-propene), (E)1,1,2,3-tetrafluoro-2-propene (HFO-1234yeE), (Z)1,1,1,2,3-pentafluoropropene (HFO-1225yeZ; also named cis-1,2,3,3,3 pentafluoroprop-1-ene), (E)1,1,1,2,3-pentafluoropropene (HFO-1225yeE; also named trans-1,2,3,3,3 pentafluoroprop-1-ene), and mixtures thereof.

Embodiments may also encompass: general polyfluorinated oxiranes with a sum formula C4F8O, in particular polyfluorinated oxirane, i.e. 2,3-(difluoro-2,3-bis(trifluoromethyl) oxirane.

Embodiments may encompass hydrochlorofluoroolefin, i.e. 1-chloro-3,3,3-trifluoropropene, in particular the trans-isomer of 1-chloro-3,3,3-trifluoropropene, i.e. HCFO-1233zd, Z1336mzz, E-1438ezy, E-1233zd, isopentanes, HFCs, in particular: 1,1,1,4,4,4-hexafluoro-2-butene (C4H2F6), specifically cis-1,1,1,4,4,4-hexafluoro-2-buten or trans-1,1,1,4,4,4-hexafluoro-2-butene; 1,1,1,2,3,3,3-heptafluoropropane or pentafluoroethane or 1,1,1,2-tetrafluoroethane, hexamethyldisiloxane, 2-trifluoromethyl-3-ethoxy-dodecafluorohexane (CAS: 297730-93-9), 4-trifluoromethyl-3-methoxy-decafluoropentane (CAS: 132182-92-4), hexafluoro-1,1,1,2,3,35 4- (1,1,2,3,3,3-hexafluoropropoxy) pentane (CAS: 870778-34-0), octafluoro-2-butene (CAS number: 360-89-4), and mixtures thereof.

In embodiments, the organofluorine compound can also be a fluoronitrile, in particular a perfluoronitrile. In particular, the organofluorine compound can be a fluoronitrile, specifically a perfluoronitrile, containing two carbon atoms, and/or three carbon atoms, and/or four carbon atoms.

The fluoronitrile may be a perfluoro-alkylnitrile, specifically perfluoroacetonitrile, perfluoro-propionitrile (C2F5CN) and/or perfluorobutyronitrile (C3F7CN).

The fluoronitrile may be perfluoroisobutyronitrile (according to the formula (CF3)2CFCN) and/or perfluoro-2-methoxypropanenitrile (according to formula CF3CF(OCF3)CN). Of these, perfluoroisobutyronitrile (i.e. 2,3,3,3-tetrafluoro-2-trifluoromethyl propanenitrile alias i-C3F7CN) is particularly preferred due to its low toxicity.

The dielectric insulation medium can further comprise a background gas or carrier gas different from the organofluorine compound (in particular different from the fluoroether, the oxirane, the fluoroamine, the fluoroketone, the fluoroolefin and the fluoronitrile) and can in embodiments be selected from the group consisting of: air, air component, N2, O2, CO2, a noble gas, H2; nitrogen oxides and in particular NO2, NO, N20; fluorocarbons and in particular perfluorocarbons, such as CF4; CF3I, SF6; and mixtures thereof.

Any mixture containing at least one of the components or organofluorine compounds or background gas components selected from any of the various lists disclosed herein is herewith also disclosed.

A further aspect of the invention relates to a use of a light sensitive marker for detecting an internal arc inside a fluid insulated switchgear. The use of a light sensitive marker may provide a simple, easily-installed, and inexpensive solution for detection of internal arcs, which is free from electromagnetic interference.

According to an embodiment of the invention, the light sensitive marker changes color, when exposed to light. The light sensitive marker may be attached to the fluid insulated switchgear at position exposed to light generated by an internal arc.

A further aspect of the invention relates to a method for detecting an internal arc inside a fluid insulated switchgear, such as described in the above and in the following.

According to an embodiment of the invention, the method comprises: attaching the light sensitive marker to the fluid insulated switchgear at a position exposed to light generated by an internal arc; exposing the light sensitive marker to light generated by an internal arc; and detecting the internal arc by visually inspecting the light sensitive marker. A service technician may look onto the light sensitive marker and may decide whether there was an internal arc or not. For example, the light sensitive marker may have multiple fields, which have different sensitivities to exposure to light and/or the light sensitive marker may be compared with a reference table, indicating which dose of light has been applied to the light sensitive marker.

It has to be understood that features of the use and the method as described in the above and in the following may be features of the switchgear as described in the above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a switchgear according to an embodiment of the invention.
Fig. 2A schematically shows a view onto a light sensitive marker used in a switchgear according to an embodiment of the invention.
Fig. 2B schematically shows a view onto the light sensitive marker used of Fig. 2A after exposure to light.
Fig. 3 schematically shows a cross-section through a viewport for a switchgear according to an embodiment of the invention.
Fig. 4 schematically shows a cross-section through a density sensor for a switchgear according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

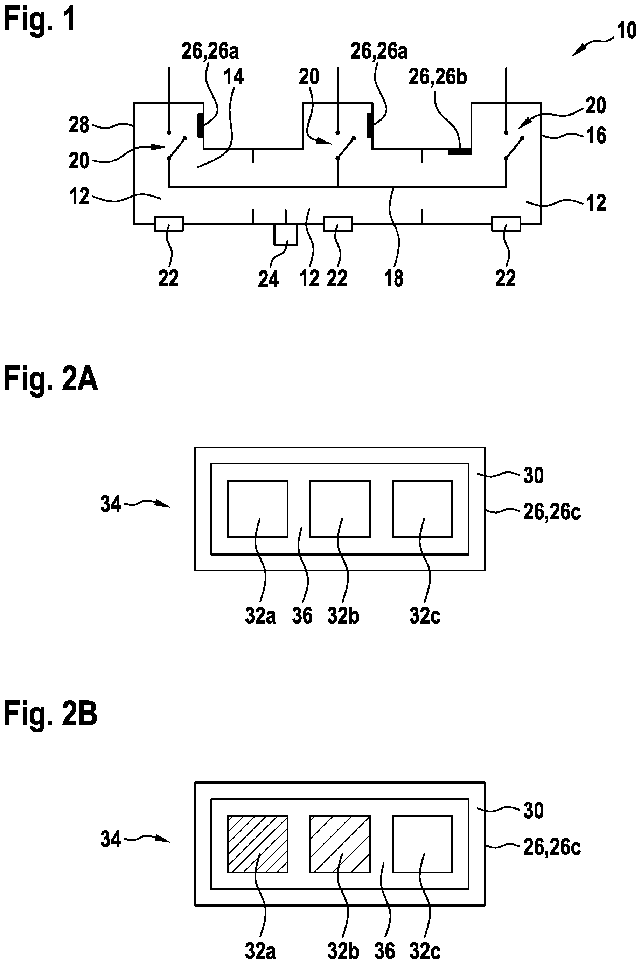

Fig. 1 shows a fluid insulated switchgear 10, which is separated into several fluid compartments 12. The fluid compartments 12 are filled with an electrically insulating fluid 14, wherein a housing 16, which provides the fluid compartments 12, may be sealed with respect to an ambient of the switchgear 10, such that fluid 14 may not escape from the fluid compartments 12 and/or air may not enter the fluid compartments 12. The fluid compartments 12 may be in fluid exchange or may be sealed with respect to each other.

The fluid 14 may be SF6 or any other medium as described above.

In the fluid compartments 12, electric conductors 18 are arranged, which are adapted for conducting and/or switching a current through it. As shown in Fig. 1, every fluid compartment 12 may contain a switch in the form of a circuit breaker 20, which may disconnect an input from the switchgear 10 from another one.

Furthermore, the switchgear 10 may comprise one or more viewing ports 22, which may be used for looking into one or more of the fluid compartments 12. For example, every viewing port 22 may be associated with a fluid compartment 12 and/or a circuit breaker 20.

The switchgear also may comprise a density sensor 24, which may be used for measuring a pressure of the fluid 14 inside one or more of the fluid compartments 12.

When an internal arc fault occurs inside the switchgear 10, light and in particular ultraviolet light is usually generated. To locate the components, at which the arc fault has occurred, several light sensitive markers 26 are attached to the switchgear 10. The light sensitive markers 26 change color, when they are exposed to a specific dose of light.

For example, the light sensitive markers 26a may be painted with a light sensitive substance, which is provided on an inside of the wall 28 of the housing 16, which surrounds the respective fluid compartment 12.

Since an internal arc fault (or any electric arc) usually leads to emission of high intensity radiation, a light sensitive marker 26 exposed to light in the affected fluid compartment 12 would change color. The light sensitive markers 26 located in other compartments 12 usually are not or at least less exposed to light and may retain their initial color. After an internal arc fault, the light sensitive markers of all of the fluid compartments 12 that may have been affected may be checked to find the location of the internal fault.

As a further example, a light sensitive marker 26b may be a plastics foil, which is attached to an inside of the wall 28 of the housing 16, which surrounds the respective fluid compartment 12.

Fig. 2A shows a light sensitive marker 26b, which is based on a plastics foil 30. Onto the plastics foil, several fields 32a, 32b, 32c of a light sensitive substance 34 are printed. The fields 32a, 32b, 32c may be covered with filter layer 36, which is adapted for filtering the light shining on the fields 32a, 32b, 32c. For example, the light may be filtered in wavelength, such that only light characteristic to electric arcs reaches the light sensitive substance 34. Such light in particular may be ultraviolet light.

Fig. 2A shows the light sensitive marker 26c in an initial condition, i.e. before an internal arc, and Fig. 2B shows the light sensitive marker 26c after an internal arc.

The fields 32a, 32b, 32c may have different sensitivities to light. The same dose of light may result in different color changes of the fields 32a, 32b, 32c. From the different color changes, the strength of the light and/or its dose may be estimated, for example to discriminate an internal arc fault from electric arcs generated due to switching of the circuit breakers 20.

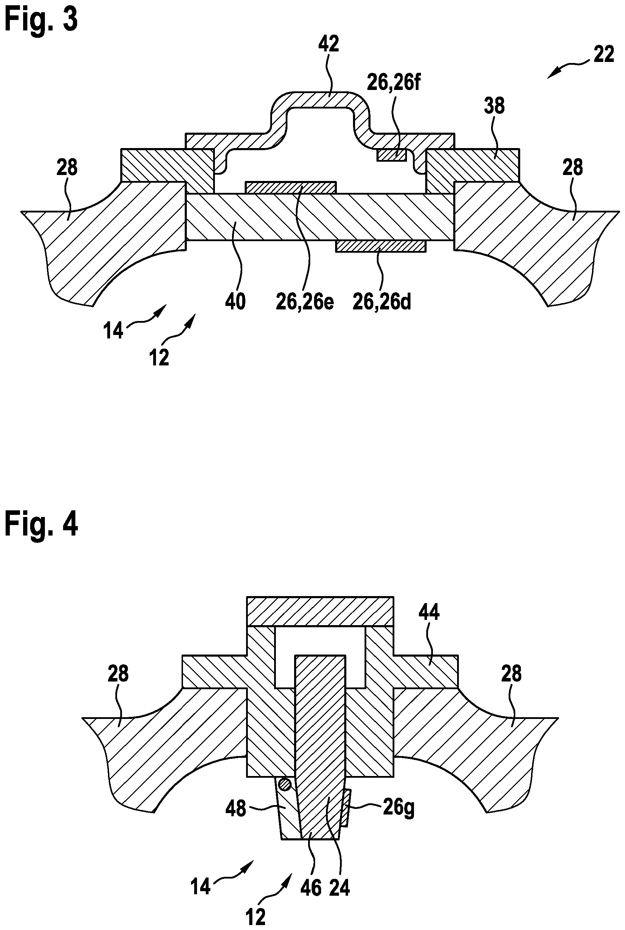

The light sensitive markers 26 of Fig. 1 and also the following Figs. 3 and 4 may be designed like the marker 26c shown in Fig. 2A and 2B. However, it also may be possible that some or all of these light sensitive markers 26 are based on paint containing a light sensitive substance 34.

Fig. 3 and 4 show further examples, where light sensitive markers 26 may be attached to the switchgear 10.

Fig. 3 shows a viewing port 22, which is provided in the wall 28 of the housing of the switchgear 10. The viewing port 22 comprises a window 38 with a glass pane 40, which allows to look into the respective fluid compartment 12. The window 38 may be covered with a cover 42, which may be plugged onto the window 38. When a service technician wants to look inside the fluid compartment 12, he or she may remove the cover 42. The cover 42 may be opaque, while the window 38 may be transparent at least partially to visible light and optionally ultraviolet light. A window 38 and/or glass pane 40 with low transmission in the ultraviolet may be compensated by a light sensitive marker 26 that is more sensitive and/or that does not include any material to further filter ultraviolet light.

Fig. 3 shows, how one or more light sensitive markers 26d, 26e, 26f may be integrated into the viewing port 22.

For example, a light sensitive marker 26d may be attached to an inside of the window 38 and/or the glass pane 40. Thus, light from the inside of the fluid compartment 12 may not be damped by the glass pane 40.

A further possibility is that a light sensitive marker 26e is attached to an outside of the window 38 and/or the glass pane 40. The damping of light by the glass pane 40 may be exploited and/or the light sensitive marker 26e more easily may be exchanged.

It also is possible that a light sensitive marker 26f is attached to an inside of the cover 42. Again, the light sensitive marker 26f may be easily accessed. In all three cases, the light sensitive markers 26d, 26e, 26f are protected from ambient light.

Fig. 4 shows a density sensor 24, which is provided in the wall 28 of the housing of the switchgear 10. The density sensor 24 is plugged into a sensor mounting 44, which is integrated into the wall 28 of the fluid compartment 12.

A tip 46 or end 46 of the density sensor 24 penetrates into the fluid compartment 12, when the density sensor 24 is mounted to the sensor mounting 44. The sensor mounting 44 has a hatch 48 that is opened by the tip 46 of the density sensor 24 and that closes, when the density sensor 24 is removed from the sensor mounting. In such a way, the density sensor 24 may be removed from the switchgear 10 without the need for further sealing.

A further possibility of attaching a light sensitive marker 26g to the switchgear 10 is to attach it to the tip 46 of the density sensor 24. A service technician may remove the density sensor 24 from its sensor mounting 44, may inspect the sensible marker 26g and may optionally replace the sensible marker 26g, when necessary.

In all the examples and embodiments described above, a service technician may attach the light sensitive marker 26 to the fluid insulated switchgear 10 at a position exposed to light generated by an internal arc, as described above. The light sensitive marker 26 then may be exposed to light generated by an internal arc. The internal arc then may be detected by the service technician, who visually inspects the light sensitive marker 26.

### LIST OF REFERENCE SYMBOLS

- 10: fluid insulated switchgear
- 12: fluid compartment
- 14: electrically insulating fluid
- 16: housing
- 18: electric conductor
- 20: circuit breaker
- 22: viewing port
- 24: density sensor
- 26: light sensitive marker
- 26a: light sensitive marker
- 26b: light sensitive marker
- 26c: light sensitive marker
- 26d: light sensitive marker
- 26e: light sensitive marker
- 26f: light sensitive marker
- 26g: light sensitive marker
- 28: wall
- 30: plastics foil
- 32a: field
- 32b: field
- 32c: field
- 34: light sensitive substance
- 36: filter layer
- 38: window
- 40: glass pane
- 42: cover
- 44: sensor mounting
- 46: tip
- 48: hatch

## Claims

1. A fluid insulated switchgear (10), comprising:
a fluid compartment (12) filled with an electrically insulating fluid (14);
an electrical conductor (18) inside the fluid compartment (12) and electrically insulated by the electrically insulating fluid (14);
a light sensitive marker (26) with a light sensitive substance (34), which changes color, when exposed to light;
wherein the light sensitive marker (26) is arranged at a position exposed to light generated by an internal arc.

2. The fluid insulated switchgear (10) of claim 1,
wherein the light sensitive marker (26) comprises an ultraviolet light sensitive substance (34), which changes color, when exposed to ultraviolet light.

3. The fluid insulated switchgear (10) of claim 1 or 2,
wherein the light sensitive marker (26a, 26b) is attached to an inside wall (28) of the fluid compartment (12) and/orthe light sensitive marker (26a, 26b) is attached, such that it is visible through a viewing port (22) into the fluid compartment (12); or
wherein the light sensitive marker (26e, 26f) is arranged outside of the fluid compartment (12).

4. The fluid insulated switchgear (10) of one of the preceding claims,
wherein the light sensitive marker (26d, 26e, 26f) is incorporated into a viewing port (22).

5. The fluid insulated switchgear (10) of claim 4,
wherein the light sensitive marker (26f) is attached to an inside of a viewing port cover (42) of a viewing port (22).

6. The fluid insulated switchgear (10) of claim 4 or 5,
wherein the light sensitive marker (26d, 26e) is attached to a glass pane (40) of the viewing port (22).

7. The fluid insulated switchgear (10) of one of the preceding claims,
wherein the light sensitive marker (26g) is attached to a density sensor (24) penetrating into the fluid compartment (12), when mounted to a sensor mounting (44) integrated into the fluid compartment (12).

8. The fluid insulated switchgear (10) of claim 7,
wherein the light sensitive marker (26g) is attached to a tip (46) of the density sensor (24);
wherein the sensor mounting (44) has a hatch (48) that is opened by the tip (46) of the density sensor (24) and that closes, when the density sensor (24) is removed from the sensor mounting (44).

9. The fluid insulated switchgear (10) of one of the preceding claims,
wherein the light sensitive marker (26c) comprises a plastics foil (30) onto which the light sensitive substance (34) is applied.

10. The fluid insulated switchgear (10) of one of claims 1 to 8,
wherein the light sensitive marker (26a) is made of paint comprising the light sensitive substance (34), which paint is applied to a wall (28) of the fluid insulated switchgear (10).

11. The fluid insulated switchgear (10) of one of the preceding claims,
wherein the light sensitive marker (26c) comprises several fields (32a, 32b, 32c), which have different sensitivities to light.

12. The fluid insulated switchgear (10) of one of the preceding claims,
wherein a light filter (36) is provided on the light sensitive marker (26c), which light filter (36) filters light falling onto the light sensitive substance (34),
wherein the light sensitive marker comprises a light filtering layer.

13. The fluid insulated switchgear (10) of one of the preceding claims,
wherein the electrically insulating fluid (14) is a dielectric insulation gas;
wherein the dielectric insulation gas comprises an organofluorine compound selected from the group consisting of: a fluoroether, an oxirane, a fluoroamine, a fluoroketone, a fluoroolefin, a fluoronitrile; and mixtures and/or decomposition products thereof.

14. A use of a light sensitive marker (26) for detecting an internal arc inside a fluid insulated switchgear, the fluid insulated switchgear (10) of one of the preceding claims, wherein the light sensitive marker (26) comprises a light sensitive substance (34) that changes color, when exposed to light and wherein the light sensitive marker (26) is attached to the fluid insulated switchgear (10) at position exposed to light generated by an internal arc.

15. A method for detecting an internal arc inside a fluid insulated switchgear (10) according to one of the claims 1 to 13, the method comprising:
attaching the light sensitive marker (26) to the fluid insulated switchgear (10) at a position exposed to light generated by an internal arc;
exposing the light sensitive marker (26) to light generated by an internal arc;
detecting the internal arc by visually inspecting the light sensitive marker (26).

## Patentansprüche

1. Fluidisolierte Schaltanlage (10), umfassend:
eine Fluidkammer (12), die mit einem elektrisch isolierenden Fluid (14) gefüllt ist;
einen elektrischen Leiter (18) innerhalb der Fluidkammer (12), und der durch das elektrisch isolierende Fluid (14) elektrisch isoliert ist;
einen lichtempfindlichen Marker (26) mit einer lichtempfindlichen Substanz (34), welche die Farbe ändert, wenn sie Licht ausgesetzt wird;
wobei der lichtempfindliche Marker (26) in einer Position angeordnet ist, die Licht ausgesetzt ist, das durch einen internen Lichtbogen generiert wird.

2. Fluidisolierte Schaltanlage (10) nach Anspruch 1, wobei der lichtempfindliche Marker (26) eine ultraviolettlichtempfindliche Substanz (34) umfasst, welche die Farbe ändert, wenn sie Ultraviolettlicht ausgesetzt wird.

3. Fluidisolierte Schaltanlage (10) nach Anspruch 1 oder 2,
wobei der lichtempfindliche Marker (26a, 26b) an einer Innenseitenwand (28) der Fluidkammer (12) angebracht ist, und/oder der lichtempfindliche Marker (26a, 26b) so angebracht ist, dass er durch ein Sichtfenster (22) in die Fluidkammer (12) hinein sichtbar ist; oder
wobei der lichtempfindliche Marker (26e, 26f) außerhalb der Fluidkammer (12) angeordnet ist.

4. Fluidisolierte Schaltanlage (10) nach einem der vorhergehenden Ansprüche, wobei der lichtempfindliche Marker (26d, 26e, 26f) in ein Sichtfenster (22) eingebaut ist.

5. Fluidisolierte Schaltanlage (10) nach Anspruch 4, wobei der lichtempfindliche Marker (26f) an einer Innenseite einer Sichtfensterabdeckung (42) eines Sichtfensters (22) angebracht ist.

6. Fluidisolierte Schaltanlage (10) nach Anspruch 4 oder 5, wobei der lichtempfindliche Marker (26d, 26e) an einer Glasscheibe (40) des Sichtfensters (22) angebracht ist.

7. Fluidisolierte Schaltanlage (10) nach einem der vorhergehenden Ansprüche, wobei der lichtempfindliche Marker (26g) an einem Dichtesensor (24) angebracht ist, der in die Fluidkammer (12) eindringt, wenn er an einer Sensorhalterung (44) montiert ist, die in die Fluidkammer (12) integriert ist.

8. Fluidisolierte Schaltanlage (10) nach Anspruch 7, wobei der lichtempfindliche Marker (26g) an einer Spitze (46) des Dichtesensors (24) angebracht ist; wobei die Sensorhalterung (44) eine Luke (48) aufweist, die durch die Spitze (46) des Dichtesensors (24) geöffnet wird und sich schließt, wenn der Dichtesensor (24) aus der Sensorhalterung (44) entfernt wird.

9. Fluidisolierte Schaltanlage (10) nach einem der vorhergehenden Ansprüche, wobei der lichtempfindliche Marker (26c) eine Plastikfolie (30) umfasst, auf welcher die lichtempfindliche Substanz (34) aufgebracht ist.

10. Fluidisolierte Schaltanlage (10) nach einem der Ansprüche 1 bis 8, wobei der lichtempfindliche Marker (26a) aus Farbe gefertigt ist, welche die lichtempfindliche Substanz (34) umfasst, wobei die Farbe auf eine Wand (28) der fluidisolierten Schaltanlage (10) aufgebracht ist.

11. Fluidisolierte Schaltanlage (10) nach einem der vorhergehenden Ansprüche, wobei der lichtempfindliche Marker (26c) mehrere Felder (32a, 32b, 32c) umfasst, die unterschiedliche Lichtempfindlichkeiten haben.

12. Fluidisolierte Schaltanlage (10) nach einem der vorhergehenden Ansprüche,
wobei ein Lichtfilter (36) auf dem lichtempfindlichen Marker (26c) bereitgestellt wird, wobei das Lichtfilter (36) Licht filtert, das auf die lichtempfindlichen Substanz (34) fällt,
wobei der lichtempfindliche Marker eine Lichtfilterschicht umfasst.

13. Fluidisolierte Schaltanlage (10) nach einem der vorhergehenden Ansprüche,
wobei das elektrisch isolierende Fluid (14) ein dielektrisches Isolationsgas ist;
wobei das dielektrische Isolationsgas eine Organofluorverbindung umfasst, die ausgewählt ist aus der Gruppe bestehend aus: einem Fluorether, einem Oxiran, einem Fluoramin, einem Fluorketon, einem Fluorolefin, einem Fluornitril und Mischungen und/oder Zersetzungsprodukten davon.

14. Verwendung eines lichtempfindlichen Markers (26) zum Detektieren eines internen Lichtbogens innerhalb einer fluidisolierten Schaltanlage, der fluidisolierten Schaltanlage (10) nach einem der vorhergehenden Ansprüche, wobei der lichtempfindliche Marker (26) eine lichtempfindliche Substanz (34) umfasst, welche die Farbe ändert, wenn sie Licht ausgesetzt wird, und wobei der lichtempfindliche Marker (26) an der fluidisolierten Schaltanlage (10) an einer Position angebracht ist, die Licht ausgesetzt ist, das durch einen internen Lichtbogen generiert wird.

15. Verfahren zum Detektieren eines internen Lichtbogens innerhalb einer fluidisolierten Schaltanlage (10) nach einem der Ansprüche 1 bis 13, wobei das Verfahren umfasst:
Anbringen des lichtempfindlichen Markers (26) an der fluidisolierten Schaltanlage (10) an einer Position, die Licht ausgesetzt ist, das durch einen internen Lichtbogen generiert wird;
Aussetzen des lichtempfindlichen Markers (26) Licht, das durch einen internen Lichtbogen generiert wird;
Detektieren des internen Lichtbogens durch visuelles Untersuchen des lichtempfindlichen Markers (26) .

## Revendications

1. Appareillage de commutation isolé par un fluide (10), comprenant :
un compartiment de fluide (12) rempli d'un fluide électriquement isolant (14) ;
un conducteur électrique (18) à l'intérieur du compartiment à fluide (12) et isolé électriquement par le fluide électriquement isolant (14) ;
un marqueur photosensible (26) avec une substance photosensible (34), qui change de couleur, lorsqu'elle est exposée à la lumière ;
dans lequel le marqueur photosensible (26) est disposé au niveau d'une position exposée à la lumière générée par un arc interne.

2. Appareillage de commutation isolé par un fluide (10) selon la revendication 1,
dans lequel le marqueur photosensible (26) comprend une substance sensible à la lumière ultraviolette (34), qui change de couleur, lorsqu'elle est exposée à la lumière ultraviolette.

3. Appareillage de commutation isolé par un fluide (10) selon la revendication 1 ou 2,
dans lequel le marqueur photosensible (26a, 26b) est fixé à une paroi intérieure (28) du compartiment de fluide (12) et/ou le marqueur photosensible (26a, 26b) est fixé, de telle sorte qu'il soit visible à travers un orifice d'observation (22) dans le compartiment de fluide (12) ; ou
dans lequel le marqueur photosensible (26e, 26f) est disposé à l'extérieur du compartiment de fluide (12).

4. Appareillage de commutation isolé par un fluide (10) selon l'une des revendications précédentes,
dans lequel le marqueur photosensible (26d, 26e, 26f) est incorporé dans un orifice d'observation (22).

5. Appareillage de commutation isolé par un fluide (10) selon la revendication 4,
dans lequel le marqueur photosensible (26f) est fixé à un intérieur d'un couvercle d'orifice de visualisation (42) d'un orifice de visualisation (22).

6. Appareillage de commutation isolé par un fluide (10) selon la revendication 4 ou 5,
dans lequel le marqueur photosensible (26d, 26e) est fixé à un panneau vitré (40) de l'orifice d'observation (22).

7. Appareillage de commutation isolé par un fluide (10) selon l'une des revendications précédentes,
dans lequel le marqueur photosensible (26g) est fixé à un capteur de densité (24) pénétrant dans le compartiment de fluide (12), lorsqu'il est monté sur un support de capteur (44) intégré dans le compartiment de fluide (12).

8. Appareillage de commutation isolé par un fluide (10) selon la revendication 7,
dans lequel le marqueur photosensible (26g) est fixé à une pointe (46) du capteur de densité (24) ;
dans lequel le support de capteur (44) a une trappe (48) qui est ouverte par la pointe (46) du capteur de densité (24) et qui se ferme, lorsque le capteur de densité (24) est retiré du support de capteur (44).

9. Appareillage de commutation isolé par un fluide (10) selon l'une des revendications précédentes,
dans lequel le marqueur photosensible (26c) comprend une feuille de plastique (30) sur laquelle la substance photosensible (34) est appliquée.

10. Appareillage de commutation isolé par un fluide (10) selon l'une des revendications 1 à 8,
dans lequel le marqueur photosensible (26a) est composé de peinture comprenant la substance photosensible (34), laquelle peinture est appliquée sur une paroi (28) de l'appareillage de commutation isolé par un fluide (10).

11. Appareillage de commutation isolé par un fluide (10) selon l'une des revendications précédentes,
dans lequel le marqueur photosensible (26c) comprend plusieurs champs (32a, 32b, 32c), qui ont des sensibilités différentes à la lumière.

12. Appareillage de commutation isolé par un fluide (10) selon l'une des revendications précédentes,
dans lequel un filtre de lumière (36) est prévu sur le marqueur photosensible (26c), lequel filtre de lumière (36) filtre la lumière tombant sur la substance photosensible (34),
dans lequel le marqueur photosensible comprend une couche de filtrage de la lumière.

13. Appareillage de commutation isolé par un fluide (10) selon l'une des revendications précédentes,
dans lequel le fluide électriquement isolant (14) est un gaz d'isolation diélectrique ;
dans lequel le gaz d'isolation diélectrique comprend un composé organofluoré choisi dans le groupe constitué par : un fluoroéther, un oxirane, une fluoroamine, une fluorocétone, une fluoro-oléfine, un fluoronitrile ; et des mélanges et/ou des produits de décomposition de ceux-ci.

14. Utilisation d'un marqueur photosensible (26) pour détecter un arc interne à l'intérieur d'un appareillage de commutation isolé par un fluide, l'appareillage de commutation isolé par un fluide (10) selon l'une des revendications précédentes, dans lequel le marqueur photosensible (26) comprend une substance photosensible (34) qui change de couleur, lorsqu'elle est exposée à la lumière et dans lequel le marqueur photosensible (26) est fixé à l'appareillage de commutation isolé par un fluide (10) au niveau d'une position exposée à la lumière générée par un arc interne.

15. Procédé de détection d'un arc interne à l'intérieur d'un appareillage de commutation isolé par un fluide (10) selon l'une des revendications 1 à 13, le procédé comprenant :
la fixation du marqueur photosensible (26) à l'appareillage de commutation isolé par un fluide (10) au niveau d'une position exposée à la lumière générée par un arc interne ;
l'exposition du marqueur photosensible (26) à la lumière générée par un arc interne ;
la détection de l'arc interne par l'inspection visuelle du marqueur photosensible (26).
